(19) Europäisches Patentamt
European Patent Office
Office européen des brevets

(11) **EP 1 262 496 B1**

(12) **EUROPEAN PATENT SPECIFICATION**

(45) Date of publication and mention
of the grant of the patent:
**16.02.2005 Bulletin 2005/07**

(51) Int Cl.[7]: **C08F 214/26**

(86) International application number:
**PCT/JP2000/008057**

(21) Application number: **00976266.7**

(22) Date of filing: **16.11.2000**

(87) International publication number:
**WO 2001/036504 (25.05.2001 Gazette 2001/21)**

(54) **FLUOROCOPOLYMER**

FLUORCOPOLYMERE

FLUOROCOPOLYMERE

(84) Designated Contracting States:
**DE FR GB IT NL**

(30) Priority: **16.11.1999 JP 32539699**

(43) Date of publication of application:
**04.12.2002 Bulletin 2002/49**

(73) Proprietor: **Daikin Industries, Ltd.
Osaka-shi, Osaka 530-8323 (JP)**

(72) Inventors:
• **MARUYA, Yoshiki
Yodogawa Works of Daikin Ind. Ltd.
Settsu-shi Osaka 566-8585 (JP)**
• **HIRAGA, Yoshiyuki
Yodogawa Wks of Daikin Ind. Ltd.
Settsu-shi Osaka 566-8585 (JP)**

• **KOMATSU, Satoshi
Yodogawa Wks. of Daikin Ind. Ltd.
Settsu-shi Osaka 566-8585 (JP)**
• **OHTANI, Katsuhide
Yodogawa Wks of Daikin Ind. Ltd.
Settsu-shi Osaka 566-8585 (JP)**

(74) Representative: **HOFFMANN - EITLE
Patent- und Rechtsanwälte
Arabellastrasse 4
81925 München (DE)**

(56) References cited:
**EP-A2- 0 088 414        JP-A- 11 210 941
JP-A- 59 166 516        US-A- 4 587 316**

**EP 1 262 496 B1**

**Description**

The present invention relates to a fluorine-containing copolymer. In particular, the present invention relates to a fluorine-containing copolymer with good moldability, which comprises tetrafluoroethylene (TFE) and hexafluoropropylene (HFP).

BACKGROUND ART

Hereto, a TFE/HFP copolymer and a TFE/HFP/perfluoroalkyl vinyl ether (PFAVE) copolymer (which are hereinafter collectively referred to as "FEP copolymer") having good melt moldability and improved resistance to stress cracking and MIT flexural life are proposed with increasing an HFP content to 8 to 15 % by weight or increasing the number of carbon atoms in the perfluoroalkyl group of PFVE (JP-B-63-2281).

In JP-B-2-7963, the extrusion moldability of the FEP copolymer is improved by limiting a melt flow rate and ZST (Zero Strength Time), and thus an extrusion rate of at least 1.5 times larger than that of the conventional FEP copolymers is achieved in the formation of a coating of an electric wire without causing melt fracture during extrusion.

In these years, the coated electric wires are produced at a higher rate. For example, an extrusion coating of a LAN cable, which is used mainly in the United States of America, is carried out at a rate of 1, 000 to 2, 000 ft/min. Therefore, it is necessary to supply a fluororesin such as a FEP copolymer, which is suitable for molding at such a high rate.

DISCLOSURE OF THE INVENTION

An object of the present invention is to provide a fluorine-containing copolymer with a good moldability at a high rate, in particular, a FEP copolymer, which can coat an electric wire without the formation of melt fracture or the fluctuation of a wire diameter even in the extrusion coating of an electric wire at a high coating rate.

According to the present invention, the above object is achieved by a fluorine-containing copolymer comprising repeating units derived from tetrafluoroethylene, hexafluoropropylene and at least one perfluoropropyl vinyl ether of the formula:

$$CF_2=CFO(CF_2)_2CF_3 \hspace{3cm} (I)$$

wherein a weight ratio of the repeating units (tetrafluoroethylene:hexafluoropropylene:perfluoropropyl vinyl ether) is 75-92:8-20:0-5, and the copolymer has a melt flow rate of 15 to 35 g/10 min., preferably 15 to 30 g/10 min. (at 372°C, 5,000 g load), and a die swell of 5 to 20%, preferably 7 to 15%, which is a measure of a molecular weight distribution, and wherein the volatile content is 0.1 % by weight or less. The volatile content will be explained below.

A FEP copolymer comprising repeating units derived from tetrafluoroethylene (TFE), hexafluoropropylene (HFP) and a perfluoroalkyl vinyl ether (PFAVE) of the formula (I) has heat resistance, chemical resistance and electrical properties comparable to those of polytetrafluoroethylene (PTFE), and melt flowability which PTFE does not have. Thus, the FEP copolymer can be processed by melt processing methods such as compression molding, extrusion, injection molding, flow dip coating, etc., and used in a wide variety of applications.

The FEP copolymer of the present invention can maintain the stable moldability during the high speed molding employed in the extrusion coating of the electric wire, since it has the melt flow rate (MFR) and the die swell as a measure of a molecular weight distribution in the specific ranges. If either the MFR or the die swell is outside the range defined by the present invention, the stable moldability cannot be attained.

Herein, the "stable moldability" means the small fluctuation of a wire diameter in the coating of an electric wire with the copolymer.

When MFR is too small, the FEP copolymer has a high molecular weight so that some adjustment of the molding conditions such as increase of a melt temperature is necessary. When MFR is too large, the FEP copolymer has a low molecular weight so that decomposed materials of the copolymer may be formed.

From those viewpoints, MFR (372°C, 5,000 g load) is from 15 to 35 g/min., preferably from 15 to 30 g/10 min.

When the FEP copolymer has a narrow molecular weight distribution, it cannot follow the wire drawing at a high speed during the extrusion coating, and some parts of the electric wire are not coated with the copolymer at a coating rate exceeding a critical value. This phenomenon is assumed to appear since a melt tension is small during molding. When the FEP copolymer has a wide molecular weight distribution, it can follow the wire drawing at a high speed during the extrusion molding, but its has a too large melt tension so that the moldability becomes unstable and the wire diameter fluctuates.

From these viewpoints, the die swell as a measure of the molecular weight distribution is from 5 to 20%, preferably from 7 to 15%.

The volatile components may be generated by the thermal decomposition of the low molecular weight polymer of the fluorine-containing copolymer or caused by the insufficient of evacuation during the melt pelletization of the copolymer. When the content of the volatile components is high, bubbles may appear during the molding such as the coating of the electric wire so that the moldability tends to become unstable. From such a viewpoint, the content of the volatile components is 0.1 % by weight or less.

The FEP copolymer of the present invention may be produced by any conventional polymerization method as long as MFR and the die swell are in the above specified range.

For example, when the copolymer is prepared by suspension polymerization, a diacyl peroxide is preferably used as a polymerization initiator. A preferable polymerization initiator is a fluorine-containing peroxide of the formula:

$$(RfCOO)_2$$

wherein Rf is a perfluoroalkyl group, a ω-hydroxyperfluoroalkyl group or a perchlorofluoroalkyl group.

As a chain transfer agent, a liquid chain transfer agent such as isoparaffin, carbon tetrachloride, diethyl malonate, mercaptan, diethyl ether, alcohol, etc. can be used. At least one chain transfer agent is selected from those compounds, and the amount of the chain transfer agent may be adjusted according to the desired values of the molecular weight and the molecular weight distribution.

In emulsion polymerization, a polymerization vessel may be a vertical one or a horizontal one.

As a polymerization initiator, at least one of ammonium persulfate and potassium persulfate is selected, and initially charged to initiate the polymerization reaction. Just after the start of the reaction, the initially charged polymerization initiator is consumed or decomposed as the reaction proceeds. Therefore, an amount of the polymerization initiator corresponding to the consumed amount is continuously supplemented to achieve the molecular weight and the molecular weight distribution as intended.

The monomeric composition, MFR and die swell defined in the present invention and the fluctuation of the wire diameter in the wire coating process are defined or measured as follows:

a) Monomeric composition

The monomeric composition of TFE, HFP and PFAVE defined in the present invention (expressed by "parts by weight") are measured mainly with a NMR analyzer.

Other measuring method comprises measuring IR absorption spectrum and then calculating the monomeric composition, as described in JP-B-63-2281.

b) MFR

According to ASTM D-1238 or JIS K-7210, using the KAYNESS melt index tester (Type 4002), about 6 g of a resin is charged in a cylinder having an inner diameter of 0.376 inch maintained at 372°C ± 0.5°C and kept standing for 5 minutes. After the temperature is equilibrated, the resin is extruded through an orifice having a diameter of 0.0825 inch and a length of 0.315 inch under a piston load of 5,000 g, and the weight (g) of the resin collected in a unit time (usually 10 to 60 seconds) is measured. The three measured weights of the resin are averaged and converted to an extruded amount per 10 minutes to obtain MFR (unit: g/10 min.).

c) Die swell

A die swell is defined as "%swell" in JP-B-48-20788, and expressed with a term "expansion rate" in JP-B-2-7963.

It is impossible to directly measure the molecular weight distribution of the FEP copolymer, since this copolymer is insoluble in any solvent and has a high molecular weight. Instead of the direct measurement of the molecular weight distribution, a degree of swelling in the melt extrusion of the resin (die swell), which may relate to the molecular weight distribution, is usually used as a measure of the molecular weight distribution.

The method for the measurement of a die swell is as follows :

Using the same melt index tester as one used in the measurement of MFR, about 2 g of a resin is charged in a cylinder having an inner diameter of 0.376 inch maintained at 372°C ± 0.5°C and kept standing for 5 minutes like in the measurement of MFR. After the temperature is equilibrated, the resin is extruded through an orifice for measuring a die swell having a diameter of 1 mm (a tolerance of +0.002 mm or less) under a piston load of 5, 000 g, and a strand extruded was cooled to room temperature. Then, a diameter of the strand is measured.

The length of the strand is 30 ± 5 mm and a diameter adopted is that measured at a position of 5 ± 1 mm from the tip end (the firstly extruded part). The diameters of three strands collected at the same time are averaged and a die swell is calculated according to the following formula:

$$\text{Die swell (\%)} = [(SD-OD)/OD] \times 100$$

where SD is a diameter of a strand (average value of three strands), and OD is a diameter of an orifice (1 mm).

When the die swell is large, the molecular weight distribution is wide. When the die swell is small, the molecular weight distribution is narrow.

d) Volatile content

Using an electric furnace equipped with a turntable, a volatile content (% by weight) is measured as follows:

A sample (pellet-form FEP resin) is precisely weight with a precision balance (which can measure a weight in an order of 0.1 mg) in an aluminum cup (weight of cup: "A"), which has been heated at 370°C for 1 hour, so that the weight of the sample is 20 ± 0.1 g (total weight: "B")

With one measuring sample, two lots are used. A standard sample having the known volatile content is also weighed and used as a reference.

The samples in the aluminum cups are quickly placed on the turntable of the electric furnace, which has been adjusted at 370°C. In this step, the revolution rate of the turntable is 6 rpm.

The samples are removed from the furnace after 30 minutes from a time when the internal temperature of the furnace returned to 370°C, and immediately stored in a desiccator. After cooling the samples for 1 hour, the weight of each sample is precisely weight with the precision balance. This weight is "C".

The weight loss of the sample after heating at 370°C for 30 minutes is calculated according to the following formula and it is used as a volatile content (% by weight):

$$\text{Volatile content (\% by weight)} = [(B-C)/(B-A)] \times 100$$

e) Fluctuation of wire diameter

An outer diameter (a diameter of a coated wire) is measured with a non-contact outer diameter measuring equipment, when an electric wire is drawn while a molten FEP copolymer is coated on the wire in the high speed wire coating process, and the outer diameter is recorded over time. The fluctuation of the wire diameter is defined by $3\sigma/x$ (x: an average outer diameter), and expressed by "percentage (%)". The wire coating conditions are as follows:

- Wire specifications: AWG24

  Wire diameter: 20.1 mil (= about 0.51 mm)
  Wire length: 100,000 ft (= about 30 km)

- Coating thickness: 7-8 mil (about 0.18-0.20 mm)
- Diameter of coated wire: 35.1 mil (0.89 mm)
- Wire drawing rate: 1,700 ft/min.
- Melt molding (extrusion) conditions:

  Cylinder diameter: 2 inches
  L/D: 30
  Temperature (°C) (see Table 1)

Table 1

| Cylinder | | | | | Clamp | Fringe | Head | Die |
|---|---|---|---|---|---|---|---|---|
| 1 | 2 | 3 | 4 | 5 | | | | |
| 338 | 360 | 371 | 382 | 399 | 404 | 404 | 404 | 416 |
| Screw speed: 24 rpm | | | | | | | | |

EXAMPLES

The present invention will be explained in detail by the following Examples and Comparative Examples.

Example 1

In a glass-lined vertical autoclave having a volume of 1,000 liters and equipped with an agitator, pure water (270 kg) and ammonium ω-hydroxyfluorocarboxylate (0.1 kg) were charged, and the interior space was replaced with nitrogen and evacuated three times. Then, a HFP monomer (233 kg) was charged under vacuum.

The agitation of the content was started and the temperature of the polymerization vessel was maintained at 29.0°C, and a TFE monomer was charged to increase the internal pressure to 0.9 MPaG. Then, di-(ω-hydrodecafluoro-heptanoyl)peroxide (hereinafter referred to as "DHP") (3.8 kg), which was diluted with perfluorohexane to about 8 % by weight was charged. Immediately, the reaction was initiated.

During the reaction, the TFE monomer was additionally charged to maintain the internal pressure of the autoclave at 0.9 MPaG. After 3, 8 and 13 hours from the start of the reaction, DHP (each 3.8 kg) was supplemented and after 18, 23, 28 and 33 hours from the start of the reaction, DHP (each 1.9 kg) was supplemented.

To control the molecular weight, methanol (1.7 kg) as a chain transfer agent was added after 5 hours from the start of the reaction.

After carrying out the reaction for 37 hours, unreacted TFE and HFP monomers were discharged, and a granular powder was obtained. To the powder, pure water was added and stirred to wash the powder. Then, the powder was removed from the autoclave. After drying the powder at 150°C for 24 hours, a FEP copolymer (333 kg) was obtained.

The weight ratio of TFE to HFP in the copolymer obtained was 86.8:13.2, and the copolymer had MFR of 18.2 g/10 min., a die swell of 9.5 % and a volatile content of 0.15 % by weight.

The polymer powder was molten and pelletized, and the high speed wire coating process was carried out under the above conditions. The fluctuation of wire diameter was 0.8 % and stable, and no melt fracture occurred. Thus, the wire was coated in good conditions.

Comparative Example 1

A FEP copolymer (320 kg) was prepared in the same manner as in Example 1 except methanol as a chain transfer agent was not added.

The weight ratio of TFE to HFP in the copolymer obtained was 86.7:13.3, and the copolymer had MFR of 10.5 g/10 min., a die swell of 3.5 % and a volatile content of 0.18 % by weight.

The polymer powder was molten and pelletized, and the high speed wire coating moldability was evaluated. Since the die swell was small, cone-break occurred and the fluctuation of wire diameter was 2.7 %. The "cone-break" means that the wire diameter of an electric wire becomes uneven since a molten resin cannot completely coat the wire due to the high drawing rate of the wire when the wire is coated with the resin.

Example 2

A stainless steel horizontal autoclave having a volume of 50 liters and equipped with an agitator was beforehand evacuated, and then deaerated distilled water (30 kg) and a 10 wt.% aqueous solution of a fluorine-containing surfactant ($C_7F_{15}COONH_4$) (8 kg) were charged. Thereafter, a liquid HFP monomer (5 kg) was charged and then a gaseous TFE-HFP monomer mixture. (TFE:HFP = 86:14 by weight) was charged. The temperature of the content was gradually raised while stirring. The internal pressure of the autoclave was increased to 1.5 MPaG at 95°C.

A 10 wt. % aqueous solution of ammonium persulfate (3.5 kg) as a polymerization initiator was added to initiate the reaction. The above monomer mixture was continuously charged to maintain a pressure of 1.5 MPaG. After 30 minutes, the stirring was stopped, and unreacted TFE and HFP monomers were recovered. Thus, a dispersion of a FEP copolymer having a polymer solid concentration of 4.5 % by weight (31.4 kg) was obtained. This dispersion is referred to as a "FEP copolymer dispersion containing FEP copolymer seed particles".

A part of the above dispersion was coagulated with nitric acid to obtain a white powder. The ratio of TFE to HFP in the composition of the copolymer obtained was 86.0:14.0 (by weight), and none of MFR, a die swell and a volatile content could be measured.

A stainless steel horizontal autoclave having a volume of 50 liters and equipped with an agitator was beforehand evacuated, and then deaerated distilled water (30 kg) and the FEP copolymer dispersion containing FEP copolymer seed particles prepared in the above step (1 kg) were charged. Thereafter, a liquid HFP monomer (18.1 kg) was charged and then a gaseous TFE-HFP monomer mixture (TFE:HFP = 86:14 by weight) was charged. The temperature of the content was gradually raised while stirring. The internal pressure of the autoclave was increased to 4.2 MPaG at 95°C.

After that, a 10 wt.% aqueous solution of ammonium persulfate (0.1 kg) was added to initiate the reaction. A 10 wt.% aqueous solution of ammonium persulfate was continuously supplemented at a rate of 1.1 g/min. from just after the start of the reaction until the end of the reaction. After the start of the reaction, the gaseous TFE-HFP monomer mixture having the same composition as above was continuously charged to maintain a pressure of 4.2 MPaG. The polymerization was continued until the polymer solid concentration reached 20 % by weight. The reaction time was 60 minutes.

The unreacted TFE and HFP monomers were recovered, and the dispersion was removed from the autoclave and coagulated with nitric acid to obtain a white powder. The weight of the FEP copolymer after drying was about 7.5 kg.

The weight ratio of TFE to HFP in the copolymer obtained was 86.3:13.7, and the copolymer had MFR of 17.8 g/10 min., a die swell of 10.0 % and a volatile content of 0.05 % by weight.

The polymer powder was subjected to a terminal-stabilizing process (wet heating treatment) and molten and pelletized, and the high speed wire coating process was carried out under the above conditions. The fluctuation of wire diameter was 0.7 % and stable, and no melt fracture occurred. Thus, the wire was coated in good conditions.

Comparative Example 2

A FEP copolymer (7.5 kg) was obtained in the same manner as in Example 2 except ethane (1.25 g) as a gaseous chain transfer agent was added before the charging of the HFP monomer.

The weight ratio of TFE to HFP in the copolymer obtained was 86.5:13.5, and the copolymer had MFR of 16.1 g/10 min., a die swell of 2.5 % and a volatile content of 0.07 % by weight.

The polymer powder was subjected to a terminal-stabilizing process (wet heating treatment) and molten and pelletized, and the high speed wire coating process was carried out. Since the die swell was small like the copolymer of Comparative Example 1, cone-break occurred and the fluctuation of wire diameter was 1.8 %.

Example 3

In the same autoclave as one used in Example 2, distilled water and the FEP copolymer dispersion containing FEP copolymer seed particles were charged in the same amounts in the same manner as in Example 2, and a liquid HFP monomer (6.9 kg) was charged. Thereafter, perfluoropropyl vinyl ether ($CF_2$=$CFOCF_2CF_2CF_3$) (0.2 kg) was charged, and then a gaseous TFE-HFP monomer mixture (TFE:HFP = 90:10 by weight) was charged, and the internal temperature was gradually raised. The internal pressure of the autoclave was increased to 4.2 MPaG at 95°C.

After the reaction was carried out in the same manner as in Example 2, except that, in the course of the process from the start to the termination of the reaction, the initial charge amount of the polymerization initiator was 80 g, the rate of continuous addition of the polymerization initiator was 0.9 g/min, and perfluoropropyl vinyl ether (each 20 g) was added when the amount of the TFE-HFP monomer mixture supplemented during the reaction reached 25, 50 and 75% to make the composition of the FEP copolymer produced uniform. After carrying out the polymerization for 45 minutes, unreacted TFE, HFP and perfluoropropyl vinyl ether monomers were recovered, and the dispersion was removed from the autoclave and coagulated with nitric acid to obtain a white powder. The weight of the FEP copolymer after drying was about 7.7 kg.

The weight ratio of TFE:HFP:perfluoropropyl vinyl ether in the copolymer obtained was 87.5:11.5:1.0, and the copolymer had MFR of 23.5 g/10 min., a die swell of 8.0 % and a volatile content of 0.06 % by weight.

The polymer powder was subjected to a terminal-stabilizing process (wet heating treatment) and molten and pelletized, and the high speed wire coating process was carried out under the above conditions. The fluctuation of wire diameter was 0.5 % and stable, and no melt fracture occurred. Thus, the wire was coated in good conditions.

Comparative Example 3

After repeating the same procedure as in Example 2 up to the charge of the FEP copolymer dispersion containing FEP copolymer seed particles, a liquid HFP monomer (6.9 kg) was charged, and then perfluoropropyl vinyl ether (0.2 kg) was charged. Furthermore, a gaseous TFE-HFP monomer mixture (TFE:HFP = 86:14 by weight) was charged, and the temperature of the content was gradually raised while stirring. The internal pressure of the autoclave was increased to 4.2 MPaG at 95°C.

The same procedure as in Example 3 was carried out from the start to the termination of the reaction except that no polymerization initiator was continuously supplemented after the start of the reaction. Thus, a FEP copolymer (7.8 kg) was obtained. The polymerization time was 50 minutes.

The weight ratio of TFE:HFP:perfluoropropyl vinyl ether in the copolymer obtained was 86.5:12.9:0.6, and the copolymer had MFR of 10.5 g/10 min., a die swell of 22.5 % and a volatile content of 0.12 % by weight.

The polymer powder was melt molded, and the high speed wire coating process was carried out. Although the melt tension was sufficiently large because of the large die swell, the fluctuation of wire diameter was 2.7%.

Comparative Example 4

After repeating the same procedure as in Example 2 up to the charge of the FEP copolymer dispersion containing FEP copolymer seed particles, a liquid HFP monomer (4.4 kg) was charged, and then perfluoropropyl vinyl ether (0.15 kg) was charged. Furthermore, a gaseous TFE-HFP monomer mixture (TFE:HFP = 86:14 by weight) was charged, and the temperature of the content was gradually raised while stirring. The internal pressure of the autoclave was increased to 3.0 MPaG at 95°C.

Thereafter, the same procedure as in Example 3 was repeated to obtain a FEP copolymer (7.8 kg) was obtained. The polymerization was 150 minutes.

The weight ratio of TFE:HFP:perfluoropropyl vinyl ether in the copolymer obtained was 86.0:13.3:0.7, and the copolymer had MFR of 36.8 g/10 min., a die swell of 22.0 % and a volatile content of 0.15 % by weight.

The polymer powder was subjected to a terminal-stabilizing process (wet heating treatment) and molten and pelletized, and the high speed wire coating process was carried out.

Although the melt tension was sufficiently large because of the large MFR and die swell of the FEP copolymer, the fluctuation of wire diameter was 2.2%.

**Claims**

1. A fluorine-containing copolymer comprising repeating units derived from tetrafluoroethylene, hexafluoropropylene and perfluoropropyl vinyl ether of the formula $CF_2=CFO(CF_2)_2CF_3$, wherein the weight ratio of the repeating units is 75-92:8-20:0-5, the copolymer has a melt flow rate of 15 to 35 g/10 min. (at 372°C, 5,000 g load), a die swell of 5 to 20%, and a volatile content of 0.1 % by weight or less.

2. The fluorine-containing copolymer according to claim 1, wherein the melt flow rate is from 15 to 30 g/10 min.

3. The fluorine-containing copolymer according to claim 1, wherein the die swell is from 7 to 15%.

**Patentansprüche**

1. Fluorhaltiges Copolymer, das aus Tetrafluorethylen, Hexafluorpropylen und Perfluorpropylvinylether der Formel $CF_2=CFO(CF_2)_2CF_3$ stammende Struktureinheiten umfasst, worin das Gewichtsverhältnis der Struktureinheiten 75-92:8-20:0-5 ist, das Copolymer eine Schmelzflussrate von 15 bis 35 g/10 min (bei 372°C, 5.000 g Last), eine Düsenquellung von 5 bis 20 % und einen Gehalt an flüchtigen Bestandteilen von 0,1 Gew.% oder weniger hat.

2. Fluorhaltiges Copolymer gemäss Anspruch 1, worin die Schmelzflussrate 15 bis 30 g/10 min beträgt.

3. Fluorhaltiges Copolymer gemäss Anspruch 1, worin die Düsenquellung 7 bis 15 % beträgt.

**Revendications**

1. Fluorocopolymère comprenant des unités récurrentes dérivées du tétrafluoroéthylène, de l'hexafluoropropylène et du perfluoropropyl vinyl éther de formule $CF_2=CFO(CF_2)_2CF_3$, dans lequel le rapport pondéral des unités récurrentes est de 75-92/8-20/0-5, le copolymère présente une vitesse d'écoulement à l'état fondu de 15 à 35 g/10 min (charge de 5 000 g, à 372 °C), un gonflement à la filière de 5 à 20 % et une teneur en substance volatile de 0,1 % en poids ou moins.

2. Fluorocopolymère selon la revendication 1, dans lequel la vitesse d'écoulement à l'état fondu est de 15 à 30 g/10 min.

3. Fluorocopolymère selon la revendication 1, dans lequel le gonflement à la filière est de 7 à 15 %.